# EUROPEAN PATENT APPLICATION

(11) **EP 4 105 610 A2**
(43) Date of publication of application: **21.12.2022**
(21) Application number: 22179315.1
(22) Date of filing: 15.06.2022
(51) Int. Cl.: G01D 5/22

(54) **OPTIMAL LVDT/RVDT DEMODULATION USING A HYBRID ALGORITHM**

(30) Priority: 15.06.2021 IN 202111026628
(71) Applicant: Hamilton Sundstrand Corporation, Charlotte, NC 28217-4578 (US)
(72) Inventor: VIJAY, Ashish, 334003 Rajasthan (IN); HILL, Robin, Solihull, D90 4DA (GB); BROOKES, David, Birmingham, B45 8GU (GB)
(74) Representative: Dehns

(57) **Abstract**

Provided are embodiments for a method for variable differential transformer demodulation using a hybrid algorithm. The method can obtain a first feedback signal over a first half (212) of a first cycle (210) and a second feedback signal over a first half (222) of a second cycle (220), and obtain a first calibration signal and a second calibration signal during a second half (214) of the first cycle. The method can also obtain an excitation signal over a second half (224) of the second cycle, and determine a sensor position of the variable differential transformer based on the first feedback signal, the second feedback signal, and the excitation signal. Also provided are embodiments for a system for variable differential transformer demodulation using a hybrid algorithm.

## Description

### BACKGROUND

The present invention relates to sensors, and more specifically, to optimal demodulation of linear variable differential transformers (LVDT) or rotary variable differential transformers (RVDT) using a hybrid algorithm.

Variable differential transformers (VDT) are used to detect or measure the displacement of moving components, such as a spool in a servo-valve, or in any kind of actuator. VDTs generally include three wire coils surrounding a moveable magnetic core. A primary coil is provided with an AC voltage which induces voltages in the secondary coils that are used to determine the position of the moveable magnetic core.

### BRIEF DESCRIPTION

According to one aspect, a method for variable differential transformer demodulation using a hybrid algorithm is provided. The method can obtain a first feedback signal over a first half of a first cycle and a second feedback signal over a first half of a second cycle; and obtain a first calibration signal and a second calibration signal during a second half cycle of the first cycle. The method can also obtain an excitation signal over a second half of the second cycle; and determine a sensor position of the variable differential transformer based on the first feedback signal, the second feedback signal, and the excitation signal.

Embodiments may include a first cycle having a first half and a second half.

Further embodiments include a second cycle having a first half and a second half.

Further embodiments include using a window for obtaining the first feedback signal is larger than the first half cycle of the first feedback signal and a window for obtaining the second feedback signal is larger than the first half cycle of the second feedback signal.

Further embodiments include using a window for obtaining the excitation signal that is smaller than the first half cycle of the second feedback signal

Further embodiments include using a window for obtaining the first calibration signal and the second calibration signal that is smaller than the first half cycle of the first feedback signal.

Further embodiments include using an excitation signal that is determined from a peak of a negative half of the excitation signal.

Further embodiments include dissipating any stored charge between each of the first feedback signal, the second feedback signal, the first calibration signal, the second calibration signal, and the excitation signal.

Further embodiments include using a first calibration signal that is a high calibration signal and the second calibration signal is a low calibration signal.

According to another aspect, a system for variable differential transformer demodulation using a hybrid algorithm is provided. The system includes a variable differential transformer; a controller coupled to the variable differential transformer. The controller can be configured to obtain a first feedback signal over a first half of a first cycle and a second feedback signal over a first half of a second cycle; and obtain a first calibration signal and a second calibration signal during a second half cycle of the first cycle. The controller is can be further configured to obtain an excitation signal over a second half of the second cycle; and determine a sensor position of the variable differential transformer based on the first feedback signal, the second feedback signal, and the excitation signal.

Embodiments include using a first cycle that having a first half and a second half.

Further embodiments include a second cycle having a first half and a second half.

Further embodiments include using a window for obtaining the first feedback signal that is larger than the first half cycle of the first feedback signal and a window for obtaining the second feedback signal that is larger than the first half cycle of the second feedback signal.

Further embodiments include using a window for obtaining the excitation signal that is smaller than the first half cycle of the second feedback signal

Further embodiments include using a window for obtaining the first calibration signal and the second calibration signal that is smaller than the first half cycle of the first feedback signal.

Further embodiments include using an excitation signal that is determined from a peak of a negative half of the excitation signal.

Further embodiments include a controller that is further configured to dissipate any stored charge between each of the first feedback signal, the second feedback signal, the first calibration signal, the second calibration signal, and the excitation signal.

Further embodiments include using a first calibration signal that is a high calibration signal and the second calibration signal that is a low calibration signal.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The following descriptions should not be considered limiting in any way. With reference to the accompanying drawings, like elements are numbered alike:
FIG. 1 depicts a linear voltage differential transformer in accordance with one or more embodiments of the disclosure;
FIG. 2 depicts a timing diagram for the linear voltage transformer in accordance with one or more embodiments of the disclosure; and
FIG. 3 depicts a flowchart of a method for demodulating transformers in accordance with one or more embodiments of the disclosure.

### DETAILED DESCRIPTION

Various sensors are used in different aerospace applications such as actuation control, landing system, etc. for position sensing. The demodulation of position from these sensors requires the acquisition of feedback voltages. The excitation voltage can also be acquired for monitoring purposes. Several architectures have been proposed for the acquisition of these three signals (2 feedback signals and 1 excitation signal).

Conventional techniques implement high frequency switching which can provide deficiencies related to the distortion of signals and error in processing. Also, in order to process data from multiple transformers, separate ADC and associated circuits are required. Although, the acquisition time may be reduced the required hardware is increased 3-fold and can introduce error in measurement due to different circuit path for each signal. In addition, using an ADC with a high-speed Mux can reduce the acquisition time with a common circuit path, however, the multiplexor must be operated at a very high frequency to acquire both feedback signals accurately in the same cycle. Thus, creating issues.

The problems of long acquisition times and high frequency switching are solved by implementing a hybrid algorithm to shorten the overall acquisition sequence to 2-cycles and provides sufficient margin to use the same circuit use the same circuit for additional LVDT/RVDT. The techniques described herein provide an optimal LVDT/RVDT demodulation architecture for improved throughput utilization of ADC without the need to operate the mux at very high frequency.

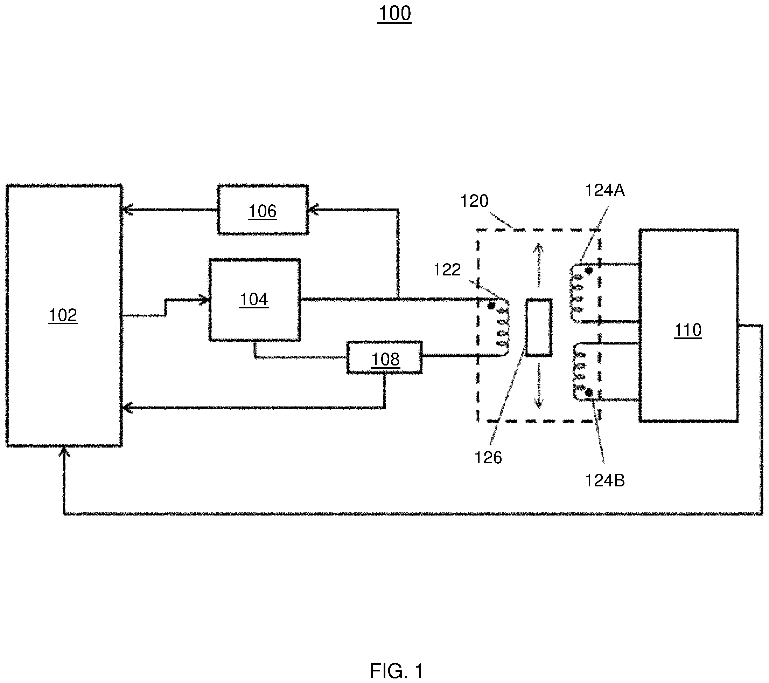

Now referring to FIG. 1, a diagram 100 of a system and VDT sensor for implementing the demodulation of a VDT using a hybrid algorithm in accordance with one or more embodiments of the invention is shown.

The diagram 100 includes a computing resource 102. The computing resource 102 is coupled to the AC power supply 104 where the AC power supply 104 provides an excitation signal to the VDT 120. The AC power supply 104 is configured to provide the excitation signal to the VDT 120, under the control of the computing resource 102. The computing resource 102 controls the AC power supply 104 by sending a control signal to the AC power supply 104. In one or more embodiments of the invention, the excitation signal provided to the VDT 120 is a sine wave.

In one or more embodiments of the invention, the VDT 120 is one of an LVDT and/or an RVDT. A non-limiting configuration of the VDT 120 includes a primary winding 122 and secondary windings 124A, 124B. In addition, the VDT 120 includes a core or slug 126 that is movable in an axial direction based on a force applied by an object. It is to be understood that different configurations of the VDT 120 are within the scope of the invention, such as different number and/or positions of windings, different number of turns in the primary and secondary coils, different size core, etc.

The VDT 120 as shown in FIG. 1 is coupled to a signal processor 110. The signal processor 110 is configured to determine the output voltage differential between the secondary windings 124A and 124B. The output voltage of the secondary windings are based on the excitation signal provided by the AC power supply 104 and position of the core in relation to the secondary windings 124A and 124B which affects the magnetic flux in the VDT 120. The signal processor 110 is configured to send the signal to the computing resource 102 for further processing.

In one or more embodiments of the disclosure, current sensing circuit 108 is electrically coupled to the AC power supply 104 and also coupled to the computing resource 102. The current sensing circuit 108 can be electrically coupled to a return line of the excitation portion of the circuit provided in FIG. 1 that is connected to the VDT 120 to perform the sensing to determine the excitation current provided to the VDT 120 during operation.

The system shown in FIG. 1 also includes a voltage sensing circuit 106. The voltage sensing circuit 106 as shown is configured to sample the excitation signal voltage provided to the VDT 120. The voltage sensing circuit 106 is coupled to the computing resource 102. It is to be understood the current sensing circuit 108 and the voltage sensing circuit 106 can be implemented by circuit components and configurations known in the art.

In one or more embodiments of the disclosure, the computing resource 102 is configured to receive and compare the signals from the signal processor 110 and the excitation current from the current sensing circuit 108. The signal received from the signal processor 110 compares the sum of the output voltages of the secondary windings 124A and 124B to the sensed excitation current. The computing resource 102 is configured to store multiple readings, perform analysis, and transmit control signals and data to components within an external to the system shown in FIG. 1. Responsive to the analysis, these signals can be compared to determine the position of the VDT 120.

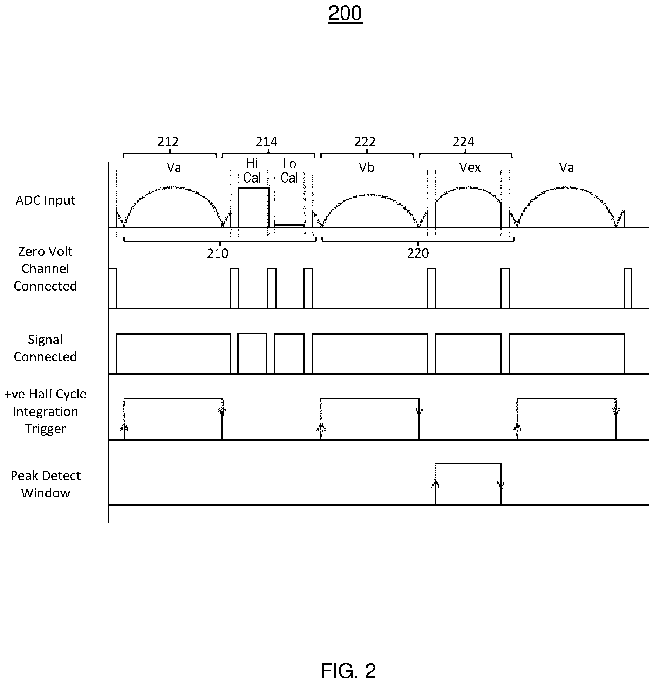

FIG. 2 depicts a plurality of waveforms 200 processed by the ADC in accordance with one or more embodiments of the disclosure. A first graph represents the sequence of "ADC Inputs" that occurs over 2-cycles to perform the signal acquisition. During the first cycle 210, a first feedback signal (Va) is obtained in a first half 212 of the first cycle 210. Also, a high calibration (Hi Cal) signal and a low calibration (Lo Cal) is obtained in a second half 214 of the first cycle 210. The first half 212 may be referred to as the "positive" half cycle of the first cycle 210 and the second half 214 may be referred to as a "negative" half cycle of first cycle 210. The positive and negative half cycle may correspond to the positive and negative portions of a waveform such as SIN wave.

Also, the window for obtaining the first feedback signal (Va), represented by the dashed line encompassing the first feedback signal (Va) is larger than the first half 212. In one or more embodiments of the disclosure, the timing of the connection of the plurality of signals is determined by a firmware programmed phase delay from an excitation generation PWM signal.

FIG. 2 also depicts a second cycle 220. During the second cycle 220, a second feedback signal (Vb) is obtained in a first half 222 of the second cycle 220. Similarly, the window for obtaining the second feedback signal (Vb) represented by the dashed lines encompassing the second feedback signal (Vb) is larger than the first half 222 of the second cycle 220. An excitation signal (Vex) is obtained in a second half 224 of the second cycle 220. As shown, the window for the excitation signal (Vex) which is represented by the dashed lines surrounding the excitation signal (Vex) is smaller than the window for obtaining the second feedback signal (Vb). This enables the peak of the excitation signal (Vex) to be obtained. In one or more embodiments of the disclosure, the peak is obtained from the negative peak of the excitation signal (Vex).

The techniques described herein enable the acquisition of the signals of a VDT to determine the position information of a sensor coupled to the VDT. As shown in FIG. 2, the first calibration signal, the second calibration signal, and the sensor excitation signal will be acquired during the negative half of the first cycle 210 and the second cycle 220.

The "Zero-Volt Channel Connected" graph represents when the ADC is connected to a zero-volt channel or ground signal to dissipate any stored charge that may remain.

The "Signal Connected" graph represents when the plurality of signals is connected to the ADC. The signals can include the first feedback signal (Va), the high calibration signal (Hi Cal), the low calibration signal (Lo Cal), the second feedback signal (Vb), and the excitation signal (Vex).

The "Positive Half Cycle Integration Trigger" graph represents with the positive portion of the first feedback signal (Va) and positive portion of the second feedback signal (Vb) is obtained. The negative portions of the first feedback signal (Va) and the second feedback signal (Vb) is not processed.

The "Peak Detect Window" graph illustrates the detection of the excitation voltage (Vex). It should be understood that because the excitation signal is acquired for monitoring purposes only, it is not required to be acquired at very high accuracy like the feedback signals. By trading the accuracy of the excitation voltage measurement and allowing this to be via peak detection of the negative half cycle, the overall sequence can be shortened to 2-cycles and provides sufficient margin to use the same circuit for additional LVDT/RVDT.

One or more illustrative embodiments of the disclosure are described herein. Such embodiments are merely illustrative of the scope of this disclosure and are not intended to be limiting in any way. Accordingly, variations, modifications, and equivalents of embodiments disclosed herein are also within the scope of this disclosure.

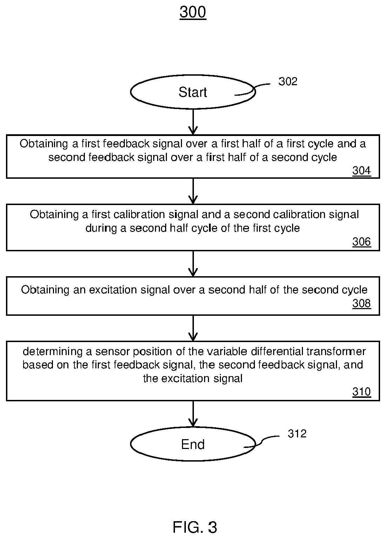

FIG. 3 depicts a flowchart of a method 300 for implementing optimal transformer demodulation in accordance with one or more embodiments of the disclosure. The method 300 can be implemented in a system such as that shown in FIG. 1. The method 300 begins at block 302 and proceeds to block 304 which 304 obtains a first feedback signal over a first half of a first cycle and a second feedback signal over a first half of a second cycle. Block 306 obtains a first calibration signal and a second calibration signal during a second half cycle of the first cycle. Block 308 obtains an excitation signal over a second half of the second cycle. Block 308 determines a sensor position of the variable differential transformer based on the first feedback signal, the second feedback signal, and the excitation signal. The method 300 ends at block 312.

The technical effects and benefits of one or more embodiments of the disclosure described herein enable a single piece of hardware to be used for acquiring data from additional transformers for a given excitation frequency and demodulation sampler rate without compromising the accuracy and performance of transformer function. In addition, the cost and size of the circuit components can be saved since the same circuit can be used for more a plurality of transformers. Finally, a reduction in the demodulation time is realized without having to operate the multiplexor at a very high frequency.

A detailed description of one or more embodiments of the disclosed apparatus and method are presented herein by way of exemplification and not limitation with reference to the Figures.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the invention as defined by the claims. In addition, many modifications may be made to adapt a particular situation or material to the teachings of the present disclosure without departing from the scope of the claims. Therefore, it is intended that the present disclosure not be limited to the particular embodiment disclosed as the best mode contemplated for carrying out this present disclosure, but that the present disclosure will include all embodiments falling within the scope of the claims.

## Claims

1. A method for variable differential transformer demodulation using a hybrid algorithm, the method comprising:
obtaining a first feedback signal over a first half (212) of a first cycle (210) and a second feedback signal over a first half (222) of a second cycle (220);
obtaining a first calibration signal and a second calibration signal during a second half (214) of the first cycle;
obtaining an excitation signal over a second half (224) of the second cycle; and
determining a sensor position of the variable differential transformer based on the first feedback signal, the second feedback signal, and the excitation signal.

2. The method of claim 1, wherein the first cycle comprises a first half and a second half, and/or wherein the second cycle comprises a first half and a second half.

3. The method of claim 1 or 2, wherein a window for obtaining the first feedback signal is larger than the first half cycle of the first feedback signal and a window for obtaining the second feedback signal is larger than the first half cycle of the second feedback signal.

4. The method of any preceding claim, wherein a window for obtaining the excitation signal is smaller than the first half cycle of the second feedback signal

5. The method of any preceding claim, wherein a window for obtaining the first calibration signal and the second calibration signal is smaller than the first half cycle of the first feedback signal.

6. The method of any preceding claim, wherein the excitation signal is determined from a peak of a negative half of the excitation signal.

7. The method of any preceding claim, further comprising dissipating any stored charge between each of the first feedback signal, the second feedback signal, the first calibration signal, the second calibration signal, and the excitation signal.

8. The method of any preceding claim, wherein the first calibration signal is a high calibration signal and the second calibration signal is a low calibration signal.

9. A system for variable differential transformer demodulation using a hybrid algorithm, the system comprising:
a variable differential transformer (120);
a controller (110) coupled to the variable differential transformer, wherein the controller is configured to:
obtain a first feedback signal over a first half (212) of a first cycle (210) and a second feedback signal over a first half (222) of a second cycle (220)
obtain a first calibration signal and a second calibration signal during a second half (214) of the first cycle;
obtain an excitation signal over a second half (224) of the second cycle; and
determine a sensor position of the variable differential transformer based on the first feedback signal, the second feedback signal, and the excitation signal.

10. The system of claim 9, wherein the first cycle comprises a first half and a second half, and/or wherein the second cycle comprises a first half and a second half.

11. The system of claim 9 or 10, wherein a window for obtaining the first feedback signal is larger than the first half cycle of the first feedback signal and a window for obtaining the second feedback signal is larger than the first half cycle of the second feedback signal.

12. The system of claim 9, 10 or 11, wherein a window for obtaining the excitation signal is smaller than the first half cycle of the second feedback signal

13. The system of any of claims 9 to 12, wherein a window for obtaining the first calibration signal and the second calibration signal is smaller than the first half cycle of the first feedback signal.

14. The system of any of claims 9 to 13, wherein the excitation signal is determined from a peak of a negative half of the excitation signal.

15. The system of any of claims 9 to 14, wherein the controller is further configured to dissipate any stored charge between each of the first feedback signal, the second feedback signal, the first calibration signal, the second calibration signal, and the excitation signal.
